# EUROPEAN PATENT APPLICATION

(11) **EP 1 736 971 A1**
(43) Date of publication of application: **27.12.2006**
(21) Application number: 05730564.1
(22) Date of filing: 14.04.2005
(51) Int. Cl.: G11B 7/0045, G11B 7/125, G11B 7/24, G11B 23/40

(54) **INFORMATION PROCESSING DEVICE**

(30) Priority: 15.04.2004 JP 2004120143
(71) Applicant: Matsushita Electric Industries Co., Ltd., Kadoma-shi, Osaka 571-8501 (JP)
(72) Inventor: KAYAMA, Hiroshi, // (JP); MOMOO, Kazuo, // (JP); TAKAHASHI, Yuuichi, // (JP)
(74) Representative: Balsters, Robert
(86) International application number: PCT/JP2005/007265
(87) International publication number: WO 2005/101382

(57) **Abstract**

Light emitted from a light source (5) is reflected by the reflection film of a polarized beam-splitter (6), passes through collimating lens (7) and a mirror (8) to reach a convergence lens (9). The convergence lens (9) forms a light spot on an information medium (1) having a visual information layer (4). Reflected light which is reflected by the visual information layer (4) passes through the convergence lens (9), the mirror (8), and the collimating lens (7), transmits through the reflection film of the polarized beam-splitter (6), passes through a half mirror (14) to reach a second light detector (13). The second light detector (13) detects an FE signal for the visual information layer (4) and feeds back the detected signal to an LPC circuit, thereby restricting power fluctuation due to surface deflection.

## Description

### TECHNICAL FIELD

The present invention relates to an information processing apparatus capable of recording an information signal onto an information layer of an information medium or reproducing the information signal recorded on the information layer of the information medium, and further capable of recording visibly identifiable visual information.

### BACKGROUND ART

The technology for converting an information signal into a digital signal and recording the digital signal began with an optical disc known as CD-R, which has a recording layer having dye as the main component. The dye is formed on a transparent substrate having a thickness of 1.2 mm. Currently, optical discs having a greater recording capacity than the CD-R, known as DVD-R, DVD-RW, DVD-RAM and the like, are widely used. In these discs, transparent substrates each having a thickness of 0.6 mm are bonded together via a recording layer having a dye or phase change materials.

As the optical discs described above are widely used, it is required to apply visual information on the optical discs, so that users may easily identify the optical discs according to the contents recorded on the optical discs (e.g. title information regarding the contents recorded on the optical discs). In recent years, printers capable of recording information on the label of optical discs have been widely used. However, these require users to utilize a printer in addition to an optical disc apparatus, which results in an additional cost to users. Since printers are generally sold as a peripheral device for a computer, it is necessary to start up the computer, and set an optical disc in a printer in order to print on a label of the disc which has been recorded using an optical disc apparatus, such as a DVD recorder. For the reasons above, an optical disc apparatus capable of directly recording a label on an optical disc having a printable label surface is desired.

As documents in this field, for example, Reference 1 is known. Specifically, Reference 1 discloses recording an image on a transformation layer having specific properties with respect to visible light (hereinafter, "visible light property transformation layer") by driving and modulating a laser based on an image information signal after moving the pickup to the inner circumference of an optical disc having a dye layer, a reflective layer, a visible light property transformation layer and a protective layer over a substrate and setting a focus on the reflective layer.
Reference 1: Japanese laid-open patent publication No. 2002-203321 (Paragraph 0016 and Figure 9)

In an information medium having a recordable information layer (e.g. a dye layer in Reference 1), a swell occurs in a surface direction due to warpage or uneven thickness of the substrate which is produced during manufacture. When the information medium is rotated by a spindle motor and the like, a deflection (generally called, a surface deflection) in a direction of the rotary shaft (i.e. a normal direction of the information medium) occurs due to factors such as warping/swelling of the information medium and rickety mechanism such as a motor. Accordingly, in a usual information medium, the focal point of a light beam moves in a direction of the rotary shaft due to the surface deflection and a predetermined signal (called as a pit or a recording mark) cannot be properly recorded on the information layer. As a result, a great amount of effort is required to prevent the surface deflection. As disclosed in Reference 1, when visual information is recorded on a visible light property transformation layer after setting a focal point of the light beam onto the inner circumference of the optical disc, which is least affected by the surface deflection, the focal point of the light beam does not stay at a predetermined location in a thickness direction and the beam becomes out of focus due to surface deflection of the visible light property transformation layer. As a result, the visible light property transformation layer cannot fully transform the visible light property, and, for example, this may cause problems of an uneven recording density and a low recording density.

The purpose of the present invention is to provide an information processing apparatus capable of recording visual information relating to the information recorded in the information layer of the information medium onto the visual information layer in an even recording density and a high recording density.

### DISCLOSURE OF THE INVENTION

In order to fulfill the purpose described above, an information processing apparatus of the present invention is provided for performing at least one of a recording operation and a reproduction operation for an information medium having an information layer. The information processing apparatus includes: a light source; a convergence lens for converging light emitted from the light source onto the information layer of the information medium; a light detecting means for receiving reflected light which is reflected by the information layer of the information medium and for generating a detection signal based on the received reflected light; and a controlling means for controlling light output of the light source based on the detection signal, wherein the information medium includes a visual information layer capable of recording visibly identifiable visual information, the visual information layer facing the information layer, the controlling means controls the light output of the light source based on the detection signal, even when the visual information is recorded in the visual information layer of the information medium.

According to the structure described above, the influence of the surface deflection of the information medium can be restricted, even if the convergence lens is in a state where it does not perform any focus control for the visual information layer. As a result, it is possible to realize recording the visual information onto the visual information layer with a stable light output.

### BRIEF DESCRIPTION OF THE DRAWINGS

Figure 1 is a diagram showing an exemplary structure of an information processing apparatus according to an embodiment of the present invention.
Figure 2 is a diagram showing an example of temporal change in an FE signal and power for emitting light.
Figure 3 is a diagram showing an exemplary structure of an information processing apparatus according to another embodiment of the present invention.
Figure 4 is a diagram showing an exemplary structure of an information processing apparatus according to another embodiment of the present invention.
Figure 5A is a diagram showing an exemplary structure of an information medium.
Figure 5B is a diagram showing another exemplary structure of an information medium.
Figure 6A is a diagram showing an example of temporal change in an FE signal.
Figure 6B is a diagram showing an example of temporal change in power for emitting light.

- 1: Information medium
- 2: Substrate
- 3: Information layer
- 4: Visual information layer
- 5: Light source
- 6: Polarized beam-splitter
- 7: Collimating lens
- 8: Mirror
- 9: Convergence lens
- 10: Power monitoring light detector
- 11: LPC circuit
- 12: First light detector
- 13: Second light detector
- 14: Half mirror
- 15: Light detector
- 16: Second light source
- 17: Second polarized beam-splitter
- 18, 19: Substrate
- 20: Information layer
- 21: Information medium
- 22: 1/4 wavelength plate

### BEST MODE FOR CARRYING OUT THE INVENTION

Hereinafter, the embodiments of the present invention will be described below with reference to the drawings.

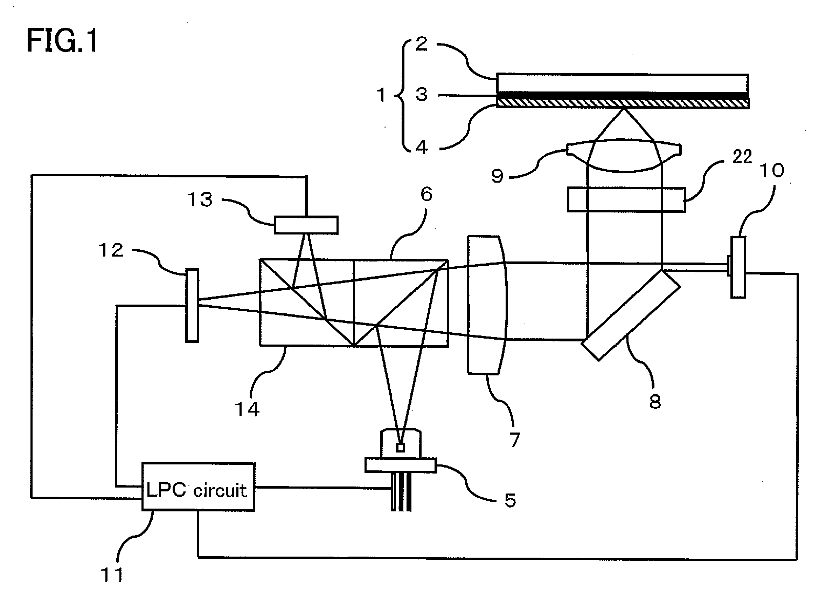

Figure 1 shows an exemplary structure of an information processing apparatus according to an embodiment of the present invention.

The information processing apparatus is configured to perform at least one of a recording operation and a reproduction operation for an information medium 1.

The information medium 1 includes a substrate 2, an information layer 3 formed on one of the principal surfaces of the substrate 2, and a visual information layer 4 laminated over the information layer 3. The information layer 3 is configured such that recording and/or reproduction (hereinafter, "recording/reproduction") can be performed for a desired information signal. The visual information layer 4 is configured such that visibly identifiable visual information can be recorded. Thus, the information medium 1 includes an information layer 3 and a visual information layer 4 which faces the information layer 3.

The information processing apparatus includes a light source 5, a polarized beam-splitter 6, a collimating lens 7, a mirror 8, a 1/4 wavelength plate 22, a convergence lens 9, a power monitoring light detector 10, a laser power control circuit (hereinafter, "LPC circuit") 11, a first light detector 12, and a second light detector 13.

Figure 1 shows a case where visual information is recorded on the visual information layer 4 of the information medium 1. When the recording/reproduction for a desired information signal is performed on the information layer 3 of information medium 1, the information medium 1 may be simply turned over.

Next, the respective functions of the elements shown in Figure 1 will be described below.

The light source 5 emits a light beam. The light beam emitted from the light source 5 is reflected by the reflection film of the polarized beam-splitter 6, is converted into a collimated light by the collimating lens 7, is directed to a direction of the optical axis of the convergence lens 9 by the mirror 8. As a result, a light spot is formed on the information medium 1 by the convergence lens 9.

The power far emitting light in the light source 5 is determined by detecting a part of light beam which is collimated by the collimating lens 7 using the power monitoring light detector 10, and by feeding a detection signal back to the LPC circuit 11 so as to add a proper driving current to the light source 5.

The reflected light reflected by the information medium 1 passes through the convergence lens 9, the mirror 8 and the collimating lens 7, and then transmits through the reflection film of the polarized beam-splitter 6, and then passes the half mirror 14 and then received by the first light detector 12. The first light detector 12 generates a detection signal (e.g. a focus error signal or a tracking error signal of the convergence lens 9, or an information signal to be recorded on the information layer 3) based on the received reflected light.

Further, when visual information is recorded on the visual information layer 4, a signal for the visual information is output from the LPC circuit 11 to the light source 5. As a result, light is emitted from the light source 5. The light emitted from the light source 5 passes through the polarized beam-splitter 6, the collimating lens 7, the mirror 8 and the convergence lens 9, and then is converged into the visual information layer 4. Thus, the visual information is recorded on the visual information layer 4.

When the visual information is recorded on the visual information layer 4, the focal point of the light beam converged by the convergence lens 9 is the hottest point. Therefore, the color changing effect of the substance (e.g. heat-sensitive color changing substance) contained in the visual information layer 4 is high. On the other hand, as described above, when the information medium 1 is rotated by a rotating means (not shown), it is usual that the surface deflection causes the focal point be moved into the film of the visual information layer 4 or be moved away from the surface of the visual information layer 4. As a result, as described above, the recording density of the visual information may be lowered or unevenness of the recording density may occur.

The visual information layer 4 is used to record visual information which can seen from human eyes, and thus the information layer 3 and the substrate 2 are required to be inhibited. For this reason, any track on the information medium 1 cannot be detected via the visual information layer 4. Accordingly, the tracking error signal for controlling the location of the information medium 1 along the radius direction cannot be detected. However, since the surface of the visual information layer 4 at the side of the convergence lens 9 (hereinafter, "surface" reflects the light beam, the focus error signal (hereinafter, "FE signal") for detecting the location of the visual information layer 4 along the normal direction based on the reflected light can be detected by the second light detector 13 by changing the traveling direction of the reflected light using the half mirror 14.

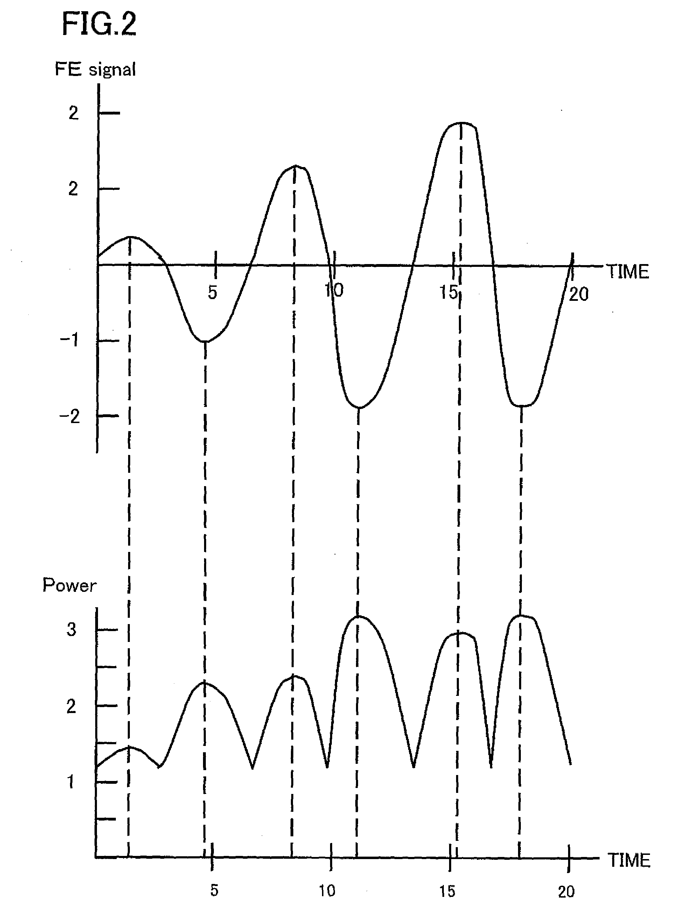

Figure 2 shows an example of temporal change in an FE signal.

The recording of the visual information on the visual information layer 4 is started from the inner circumference of the information medium 1 in a similar manner as the information signal is recorded on the information layer 3. As described above, since the inner circumference is close to the rotational central shaft, there is a small influence from the swell on the surface of information layer. Hence, the surface defection is low and the amplitude of the FE signal is relatively small. In the outer circumference, however, even though the swell itself may be about the same level as the inner circumference, the surface deflection becomes greater. Therefore, the amplitude of the FE signal becomes larger due to the influence from the surface deflection. For this reason, the FE signal is detected by the second light detector 13, and the heat generation efficiency against the visual information layer 4 can be estimated based on the displacement of the focal point from the visual information layer 4 along the focus direction, which is caused by the surface deflection. By feeding the detection signal of the light detector 12 back to the LPC circuit 11, the light output of the light source 5 is controlled by changing the power for emitting light applied to the light source 5 in accordance with the surface deflection.

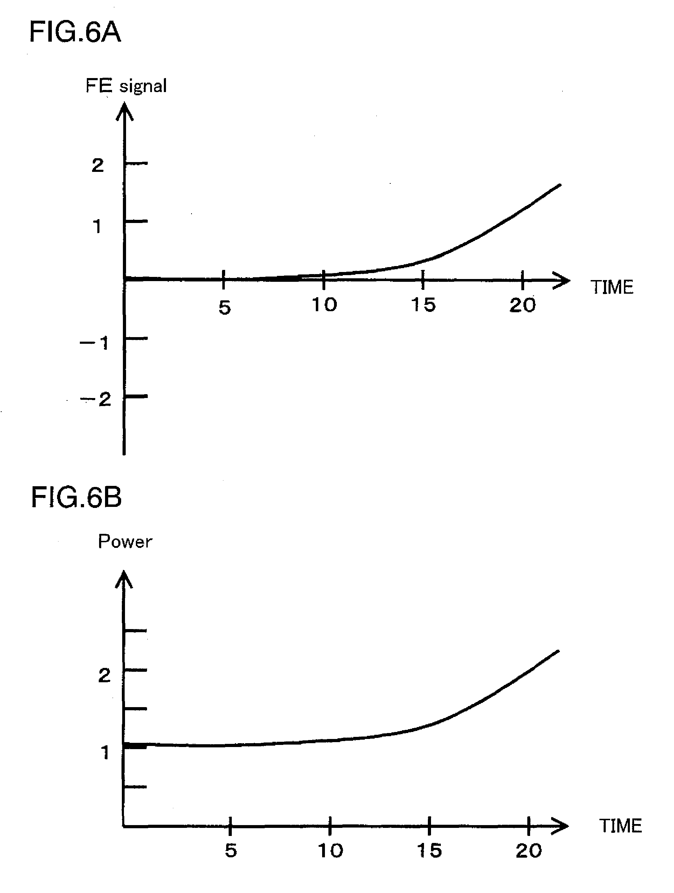

By adopting such a structure described above, the irradiation power from the light source 5 to the visual information layer 4 may be equalized, and therefore uneven density and low density of the visual information on the visual information layer 4 may be restricted and the recording quality may be improved. In the description above, a case of an information medium with surface deflection is described. However, when an information medium is uniformly tilted (i.e. there is a disc tilt) in the outer circumference portion compared to the inner circumference portion, the quality of recording the visual information on the visual information layer 4 may be improved by controlling the light output as shown in Figure 6B, based on the displacement from the best focus position as shown in Figure 6A. A case where the LPC circuit 11 performs power control step by step is described with reference to Figure 2. However, the power control may be performed based on a control target value (e.g. a predetermined threshold value) that allows recording of the visual information on the visual information layer 4 in a high quality.

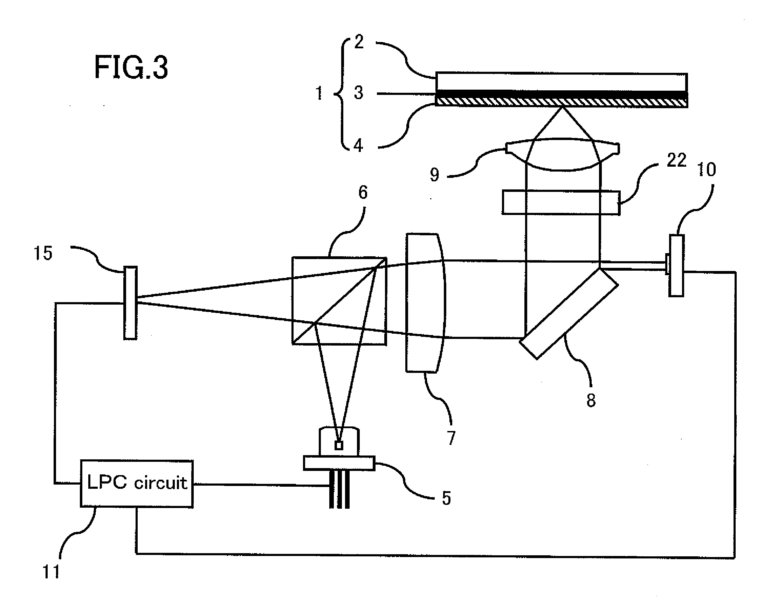

Next, the information processing apparatus according to another embodiment of the present invention will be described below with reference to Figure 3.

In Figure 3, the same reference numeral is assigned to an element which is the same as element shown in Figure 1, and a detailed description of the element will be omitted.

The structure shown in Figure 3 is different from the structure shown in Figure 1 in that a light detector 15 is provided. The light detector 15 is obtained by including the function of the second light detector 13 into the first light detector 12.

By omitting the second light detector 13, it is possible to omit the half mirror 14. According to the structure of the present embodiment, it is possible to omit the second light detector 13 which is dedicated to the detection of the FE signal for the visual information layer 4. This makes it possible to reduce the number of parts. As a result, the cost can be reduced and the optical system can be simplified. In addition, this structure is exactly the same as that of an optical pickup commonly used in the information processing apparatus. Thus, a conventional optical pickup may be used as it is. The structure described with reference to Figure 2 is applied to the present embodiment in the same manner.

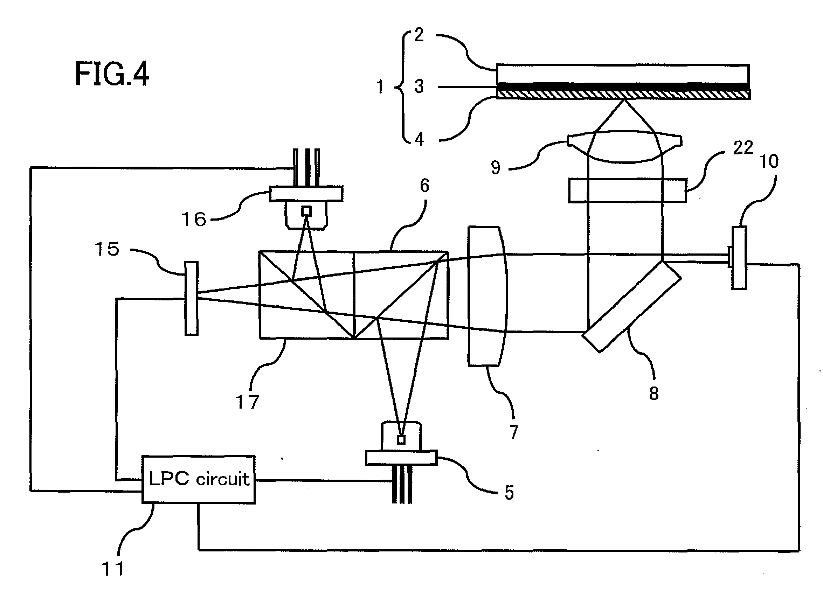

Further, the information processing apparatus according to another embodiment of the present invention will be described below with reference to Figure 4.

In Figure 4, the same reference numeral is assigned to an element which is the same as the element shown in Figures 1 and 3, and a detailed description of the element will be omitted.

The structure shown in Figure 4 is different from the structures shown in Figures 1 and 3 in that a second light source 16 other than the light source 5 is newly added. Due to the addition of the second light source 16, a second polarized beam-splitter 17 is also added.

The central wavelengths of oscillation of the light source 5 and the second light source 16 may be the same or may be different from each other (if they are the same, then it is required to slightly change the arrangement of the optical parts, such as replacing the polarized beam-splitter 6 and the second polarized beam-splitter 17 with a half mirror, or to slightly change the arrangement of the light source 5 and the second light source 16). The numerical apertures (hereinafter, "NAs") of the convergence lens 9 for the light beams emitted from the light source 5 and the second light source 16 may be the same or may be different from each other. The light beam emitted from the second light source 16 is split by the second polarized beam-splitter 17, transmits through the reflection film of the polarized beam-splitter 6, passes through the collimating lens 7 and the mirror 8 and is converged by the convergence lens 9.

The reflected light which is reflected by the information medium 1 transmits through the convergence lens 9, the mirror 8, the collimating lens 7, the polarized beam-splitter 6 and second polarized beam-splitter 17, and is received by the light detector 15.

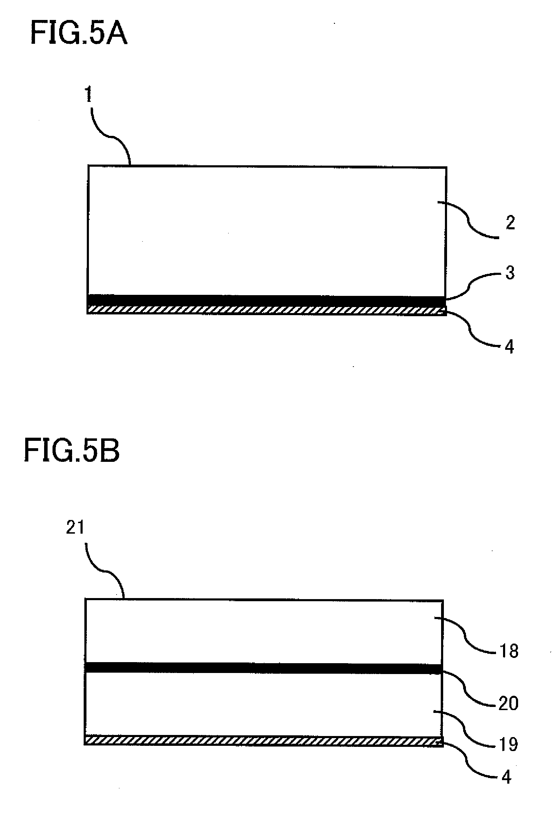

The light detector 15 selectively detects a tracking error signal, a focus error signal and a recording signal, based on the received reflected light. For example, when the NAs are not the same, it is possible to perform recording/reproduction for different types of information mediums, such as a CD-type information medium 1 shown in Figure 5A and a DVD-type information medium 21 shown in Figure 5B. The CD-type information medium 1 is obtained by forming an information layer 3 on a substrate having a thickness of 1.2 mm and forming a visual information layer 4 on the information layer 3. The DVD-type information medium 21 is obtained by boding substrates 18 and 19 each having a thickness of 0.6 mm via an information layer 20 and forming a visual information layer 4 on one of the substrates (e.g. the substrate 19 in the case shown in Figure 5B).

When the light beams emitted from the light source 5 and the second light source 16 have the same wavelength and the NAs of the convergence lens 9 are the same with respect to the light source 5 and the second light source 16, the second light source may be adopted as a supplementary light source which assists the light source 5 for the purpose of recording the visual information on the visual information layer 4. This may make it possible to improve a recording speed and a recording density of the visual information. In this case, the light source 5 and the second light source 16 mayhave a structure in which they emit light simultaneously, or may have a structure in which they emit light alternately. According to the structure in which they emit light simultaneously, it is possible to improve a recording density of the visual information due to the increase in power for emitting light. According to the structure in which they emit light alternately, it is possible to prolong the life of the light source 5 and the second light source 16. The effect according to the structure in which they emit light simultaneously or the effect according to the structure in which they emit light alternately remains the same, even if the IVAs of the convergence lens 9 are different between the light source 5 and the second light source 16 or even if the oscillation wavelengths of the light beams emitted from the light source 5 and the second light source 16 are different from each other.

As visually identifiable information is recorded on the visual information layer, it is desired that there is a high contrast between the visual information recorded on the visual information layer and the visual information layer. In order to increase the contrast, for example, it is considered that dark visual information is recorded on a white or near-white pale color visual information layer or vice versa. In the information processing apparatus according to the present invention, the former combination is preferable for the visual information layer. This is because the information processing apparatus according to the present invention detects the reflected light which is reflected by the visual information layer. As for a method for controlling the light output of the controlling means based on the reflected light which is reflected by the visual information layer, it may be done, for example, by first driving the convergence lens facing the visual information layer up and down along a direction of the optical axis, and then detecting the detection signal to be output to the controlling means based on the change in the intensity of the reflected light, which is produced due to the up and down drive of the convergence lens. When the intensity of the reflected light is forcibly changed as in the example above, the variation caused by the surface deflection can be separated. By feeding only the influence of the surface deflection back to the controlling means, it is possible to accurately control the light output from the light source. According to this structure, the variation itself in the intensity of the reflected light may be detected by the light detecting means by driving the convergence lens up and down along a direction of the optical axis, regardless of whether or not the focal point of the convergence lens is on the visual information layer.

In all the embodiments described above, the accuracy of control for the power for emitting light can be further improved and the stability of recording the visual information can be guaranteed, when the information processing apparatus adopts a structure in which the light output from the light source 5 and/or the second light source 16 are controlled via the LPC circuit 11 based on both the second detection signal of the power monitoring light detector 10 and the detection signal detected by the second light detector 13 or the light detector 15.

As described above, the present invention is exemplified by the use of its preferred embodiments. However, the present invention should not be interpreted solely based on the embodiments described above. It is understood that the scope of the present invention should be interpreted solely based on the claims. It is also understood that those skilled in the art can implement equivalent scope of technology, based on the description of the present invention and common knowledge from the description of the detailed preferred embodiments of the present invention. Furthermore, it is understood that any patent, any patent application and any references cited in the present specification should be incorporated by reference in the present specification in the same manner as the contents are specifically described therein.

### INDUSTRIAL APPLICABILITY

The information processing apparatus of the present invention is capable of recording visibly identifiable visual information which represents the contents of the information recorded in the information layer of the information medium or an image and the like which enables visual identification of the information medium, onto the visual information layer of the information medium, by using a plurality of light sources as necessary.

## Claims

1. An information processing apparatus for performing at least one of a recording operation and a reproduction operation for an information medium having an information layer, comprising:
a light source;
a convergence lens for converging light emitted from the light source onto the information layerof the information medium;
a light detectingmeans for receiving reflected light which is reflected by the information layer of the information medium and for generating a detection signal based on the received reflected light; and
a controlling means for controlling light output of the light source based on the detection signal,
wherein the information medium includes a visual information layer capable of recording visibly identifiable visual information, the visual information layer facing the information layer,
the controlling means controls the light output of the light source based on the detection signal, even when the visual information is recorded in the visual information layer of the information medium.

2. An information processing apparatus according to claim 1, wherein:
the detection signal is a focus error signal, and the controlling means controls the light output of the light source in accordance with a deviation of the focus error signal from a control target value.

3. An information processing apparatus according to claim 1, further comprising:
a light output monitoring light detecting means for detecting light output form the light source,
wherein the controlling means controls the light output of the light source, based on the detection signal output from the light detecting means and a further detection signal output from the light output monitoring light detecting means.
